# EUROPÄISCHE PATENTSCHRIFT

(11) **EP 0 636 224 B1**
(45) Veröffentlichungstag und Bekanntmachung des Hinweises auf die Patenterteilung: **06.05.1998**
(21) Anmeldenummer: 94904906.8
(22) Anmeldetag: 04.02.1993
(51) Int. Cl.: F16K 27/04

(54) **FORMSCHLÜSSIGE BEFESTIGUNG EINES VENTILGEHÄUSES IN EINEM AUFNAHMEKÖRPER**
FORM-LOCKING FASTENER FOR SECURING A VALVE HOUSING IN ITS HOLDER
FIXATION PAR LIAISON DE FORME D'UN CORPS DE SOUPAPE DANS SON SUPPORT

(30) Priorität: 04.07.1992 DE 4221988
(43) Veröffentlichungstag der Anmeldung: 01.02.1995
(73) Patentinhaber: ITT Automotive Europe GmbH, 60488 Frankfurt am Main (DE); ALFRED TEVES METALLWARENFABRIK GMBH & CO. OHG, 51702 Bergneustadt (DE)
(72) Erfinder: GOOSSENS, André F. L., B-2840 Rumst (BE); WEISBROD, Helmut, D-6350 Bad Nauheim (DE); ZUTT, Ulrich, D-6272 Niedernhausen 4 (DE); ROTTIERS, Antoine, B-1840 Londerzeel (BE); ZAVISKA, Dalibor, D-6236 Eschborn (DE); VOLZ, Peter, D-6100 Darmstadt (DE)
(74) Vertreter: Portwich, Peter
(86) Internationale Anmeldenummer: EP9300250
(87) Internationale Veröffentlichungsnummer: WO9401708

(56) Entgegenhaltungen:
- EP-A- 0 007 712
- SE-C- 219 668
- US-A- 5 129 417

## Beschreibung

Die Erfindung betrifft ein Ventil, insbesondere Elektromagnetventil nach dem Oberbegriff des Anspruchs 1. Ein derartiges Ventil ist allgemein bekannter Stand der Technik.

Aus der nicht vorveröffentlichten deutschen Patentanmeldung P 41 41 546.9 ist bereits ebenfalls ein Elektromagnetventil nach dem Oberbegriff des Anspruchs 1 bekannt, dessen Ventilgehäuse in einer Stufenbohrung des Ventilaufnahmekörpers abgedichtet befestigt ist. Zur Abdichtung weist das Ventilgehäuse zwei in Umfangsnuten eingesetzte Dichtungen auf, die ein Entweichen von Druckmittel aus dem Ringraum des Ventilaufnahmekörpers verhindern sollen. Durch eine mittelbar auf das Ventilgehäuse wirksame Kraft, die beispielsweise durch einen über das Ventil aufgestülpten Deckel erzeugt werden kann, wird das Elektromagnetventil in dem Ventilaufnahmekörper gehalten. Unter Hochdruckbetrieb des Ventils ist die am Ventilgehäuse wirksame Schubkraft erheblich, weshalb der die Ventilhaltekraft erzeugende Deckel bezüglich der Verankerung und Strukturfestigkeit entsprechend aufwendig zu dimensionieren ist.

Daher ist das Erfordernis einer speziellen, separaten Abdichtung des Ventilgehäuses im Ventilaufnahmekörper sowie das Erfordernis zur Einleitung einer externen Haltekraft in das Ventilgehäuse als verbesserungswürdig anzusehen. Die kraftschlüssige Befestigung des Ventilgehäuses im Ventilaufnahmekörper durch Verschrauben ist ebenso wie die Befestigung mittels Formschluß, beispielsweise in Form eines am Ventilgehäuse befestigten, in eine Ringnut am Ventilaufnahmekörper einrastenden Sprengrings bekannt. Diese Maßnahmen sind hinsichtlich Konstruktion und Montage aufwendig und erfordern spezielle Abdichtmaßnahmen zwischen Ventilgehäuse und Ventilaufnahmekörper. Grundsätzlich führt jede erforderliche Dichtung zu einer erheblichen Zunahme des erforderlichen Raumbedarfs, was mangels begrenzten Einbauverhältnissen als nachteilig zu bewerten ist.

Daher ist es die Aufgabe der Erfindung, ein möglichst kompaktes Ventil zu schaffen, das sich durch eine besonders einfache und betriebsichere Befestigung und Abdichtung des Ventilgehäuses im Ventilaufnahmekörper auszeichnet.

Diese Aufgabe wird bei einem gattungsgemäßen Ventil erfindungsgemäß durch die den Patentanspruch 1 kennzeichnenden Merkmale gelöst, wonach infolge einer Relativbewegung des Ventilgehäuses gegenüber dem Ventilaufnahmekörper das am Umfang des Ventilaufnahmekörpers befindliche Werkstoffvolumen in eine am Umfang befindliche Ausnehmungen des Ventilgehäuses plastisch verdrängt ist.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen beispielhaft:
- Figur 1: einen Querschnitt durch ein in der Grundstellung elektromagnetisch stromlos geöffnetes Magnetventil,
- Figur 2: die Skizze einer weiteren Ausführungsform des Ventilgehäuses nach Figur 1,
- Figur 3: im vergrößerten Maßstab eine weitere, abschnittsweise gezeigte Ausbildung des Ventilgehäuses zur Befestigung im Ventilaufnahmekörper.

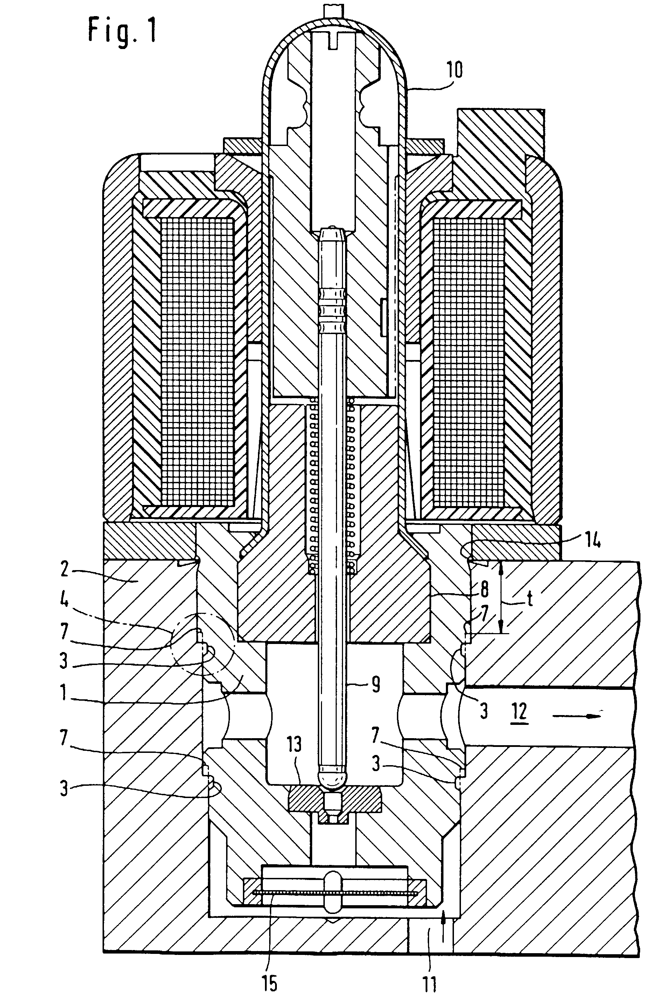

Die Figur 1 zeigt die Gesamtansicht eines Elektromagnetventils mit der erfindungsgemäßen Befestigung des Ventilgehäuses 1 im Ventilaufnahmekörper 2 in einer erheblich vergrößerten Darstellung. Das Ventilgehäuse 1 ist ein im wesentlichen hülsenförmiges, nur wenige Millimeter abmessendes Teil, welches vorzugsweise aus kaltgezogenem und aus einem relativ zum Ventilaufnahmekörper härterem Werkstoffgefüge besteht. Der vorzugsweise aus einer Aluminiumlegierung gefertigte Ventilaufnahmekörper 2 ist dementsprechend weniger hart als das beispielsweise aus Automatenstahl hergestellte Ventilgehäuse 1. Dieser Härteunterschied ist letztlich ausschlaggebend für die im wesentlichen formschlüssige Befestigung des Ventilgehäuses 1 im Ventilaufnahmekörper 2. Als konstruktiv zweckdienliche Maßnahme erweisen sich die als umlaufende Ringnuten ausgeführten Ausnehmungen 3 am Ventilgehäuse 1, die näherungsweise hohlkehlenförmig jeweils an der im Durchmesser abgestuften Mantelfläche des Ventilgehäuses 1 angeordnet sind. Hierdurch kann das relativ weiche Werkstoffvolumen des Ventilaufnahmekörpers 2 während des Einpreßvorganges jeweils als umlaufende Nase in die Ausnehmungen 3 plastisch verformt einfließen und verdichtet werden. Damit übernimmt das Ventilgehäuse 1 - in Folge seiner in Fügerichtung abnehmenden Abstufung des Durchmessers - die Funktion eines Verstemmstempels, dem die Stufenbohrung des Ventilaufnahmekörpers 2 im Durchmesser angepaßt ist. Die ursprüngliche Tiefe t der jeweiligen Bohrungsstufe 7 im Ventilaufnahmekörper 2 ist um das in Fügerichtung in die Ausnehmung 3 zu verdrängende Volumen entsprechend kleiner bemessen, als der erforderliche Verstemmhub des Verstemmstempels, bzw. des Ventilgehäuses 1.

Wie aus der Darstellung hervorgeht, nimmt das hülsenförmige Ventilgehäuse 1 die vom Ventilstößel 9 zu steuernde Druckmitteldurchgangsbohrungen 11,12, den Magnetkern 8, die Ventilhülse 10, den Ventilsitz 13 und einen Plattenfilter 15 auf. Um eine sichere Abdichtung des Ventilgehäuses 1 im Ventilaufnahmekörper 2 zu gewährleisten, ist jeweils die als Querkanal ausgebildete Druckmitteldurchgangsbohrung 12 abbildungsgemäß oberhalb und unterhalb zur Kanal führung mit einer umlaufenden Verstemmstelle 4 versehen, so daß einerseits bei geschlossenem Ventilstößel 9 ein Kurzschlußstrom und damit ein Druckausgleich zwischen den beiden Druckmitteldurchgangsbohrungen 11,12 des Ventilaufnahmekörpers 2 verhindert ist, andererseits bei geöffnetem Ventilstößel 9 das unter hohem Druck stehende Fluid nicht in Richtung der abbildungsgemäßen oberen Verstemmstelle an die Oberfläche des Ventilaufnahmekörpers 2 durchdringen kann. Die Verstemmstellen 4 erzeugen folglich nicht nur die Haltekraft zur Befestigung des Magnetventils im Ventilaufnahmekörper 2, sondern gewährleisten gleichzeitig die Abdichtung der hydraulisch beaufschlagten Ventilkomponenten im Ventilaufnahmekörper 2.

Ergänzend zu den vorherigen Erläuterungen wird auf die weitere Möglichkeit zur Anordnung einer separaten, d.h. zusätzlichen Einscherung 14 bzw. Verstemmung mit einem Werkzeug an der Oberfläche des Ventilaufnahmekörpers 2 verwiesen. Die Ventilhülse 10 und der Magnetkern 8 sind im gezeigten Ausführungsbeispiel mittels einer äußeren Verstemmung am Ventilgehäuse 1 befestigt.

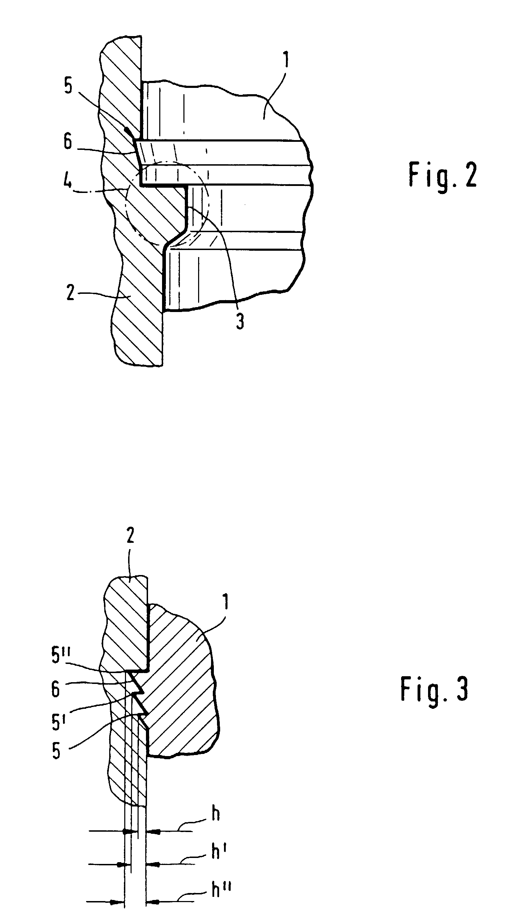

Die Figur 2 zeigt abschnittsweise und im vergrößerten Maßstab eine Ergänzung zur Ausführungsform nach Figur 1, wonach zusätzlich ein sägezahnähnlicher, am Umfang des Ventilgehäuses 1 umlaufender Vorsprung 5, beispielsweise in Form einer Schneide vorgesehen ist, die oberhalb der Verstemmstelle 4 angeordnet ist. Hierdurch kommt über die im wesentlichen formschlüssige Verbindung der Verstemmstellen 4 ein zusätzliches, im wesentlichen reibschlüssiges Verkrallen des Vorsprungs 5 zum Tragen, das entgegen der Druck- bzw. Kraftbeaufschlagungsrichtung der Verbindung wirksam ist. Hierdurch läßt sich die Haltekraft erhöhen und es wird eine zusätzliche Dichtkante an dem sägezahnförmigen Vorsprung 5 erzielt.

In Ergänzung zur Figur 2 zeigt die Figur 3 im Querschnitt mehrere, in der Zeichnung übereinander bzw. hintereinander angeordnete sägezahnförmig am Umfang des Ventilgehäuses 1, in Nähe der Verstemmstelle 4 angeordnete Vorsprünge 5, 5', 5". Abbildungsgemäß weisen die Vorsprünge 5, 5', 5" entgegengesetzt zur Fügerichtung eine ansteigende Schneidenhöhe h, h', h" auf, wobei über das aus Figur 2 bereits ersichtliche, die Zahnschräge 6 in Fügerichtung, d.h. in die Bohrung des Ventilaufnahmekörpers 2 gerichtet ist.

Durch die entsprechenden Ausführungen der Vorsprünge 5, 5', 5'' kann die in etwa auf Höhe des Magnetkerns 8 umlaufend angeordnete Verstemmstelle 4 entfallen, sofern die Auslegung der Betriebsdrücke dies zuläßt.

Durch die im besonderen in Figur 1 ersichtliche selbsteinscherende Verbindung des Ventilaufnahmekörpers 2 mit dem Ventilgehäuse 1 ist es auf verblüffend einfache Weise möglich, eine komplett vormontierte Ventileinheit ohne zusätzlich erforderliche Abdichtmaßnahmen und Befestigungsmittel in einem Arbeitsgang mittels einer einfach durchzuführenden Schubbewegung unlösbar im Ventilaufnahmekörper 2 zu befestigen. Das Ventilgehäuse 1 kann außerdem durch den Entfall von separaten Dichtungen äußerst kleinbauend gestaltet werden, so daß der Raumbedarf sowohl für das Ventilgehäuse 1 wie auch für den Ventilaufnahmekörper 2 ein Minimum wird.

Weitere Anwendungsmöglichkeiten der Erfindung sind für alle Ventilgehäuse aufweisende Ventilmittel gegeben. Hierzu wird beispielhaft auf Druck- und Stromregelventile, Überdruckventile sowie Rückschlagventile verwiesen, unabhängig davon ob es sich um Sitz- und/oder Schieberventilbauformen handelt.

### Bezugszeichenliste

- 1: Ventilgehäuse
- 2: Ventilaufnahmekörper
- 3: Ausnehmung
- 4: Verstemmstelle
- 5,5',5'': Vorsprung
- 6: Zahnschräge
- 7: Bohrungsstufe
- 8: Magnetkern
- 9: Ventilstößel
- 10: Ventilhülse
- 11: Druckmitteldurchgangsbohrung
- 12: Druckmitteldurchgangsbohrung
- 13: Ventilsitz
- 14: Einscherung
- h,h',h": Höhe
- t: Tiefe der Bohrungsstufe

## Patentansprüche

1. Ventil, insbesondere Elektromagnetventil, mit einem Ventilgehäuse (1), das die Funktion des Ventils bestimmende Ventilbauteile, wie Ventilschließglied (9), Ventilsitz (13) aufweist, mit am Umfang des Ventilgehäuses (1) vorgesehenen Dichtflächen, die mit einem das Ventilgehäuse (1) tragenden Ventilaufnahmekörper (2) korrespondieren mit einem das Ventilgehäuse (1) im Ventilaufnahmekörper (2) arretierenden Befestigungsmittel, dadurch **gekennzeichnet**, daß infolge einer Relativbewegung des Ventilgehäuses (1) gegenüber dem Ventilaufnahmekörper (2) das am Umfang des Ventilaufnahmekörpers (2) befindliche Werkstoffvolumen in eine am Umfang befindliche Ausnehmung (3) des Ventilgehäuses (1) plastisch verdrängt ist.

2. Ventil nach Anspruch 1, dadurch **gekennzeichnet**, daß der Werkstoff des Ventilaufnahmekörpers (2) eine gegenüber dem Ventilgehäuse (1) geringere Werkstoffhärte aufweist.

3. Ventil nach Anspruch 1 oder 2, dadurch **gekennzeichnet**, daß der Umfang des Ventilgehäuses (1) mit als Ringnuten ausgeführten Ausnehmungen (3) versehen ist, in die das Material des Ventilaufnahmekörpers (2) näherungsweise proportional der Hubbewegung beider, relativ zueinander verschiebbarer Teile (1,2) verdrängt ist.

4. Ventil nach mindestens einem der vorhergehenden Ansprüche 1 bis 3, dadurch **gekennzeichnet**, daß das Ventilgehäuse (1) als Verstemmstempel ausgebildet ist.

5. Ventil nach mindestens einem der vorhergehenden Ansprüche, dadurch **gekennzeichnet**, daß die Volumenaufnahme der Ausnehmung (3) gleich oder kleiner ist, als eine aus dem verdrängbaren Volumen gebildete Verstemmstelle (4).

6. Ventil nach Anspruch 5, dadurch **gekennzeichnet,** daß die Mantelfläche des Ventilgehäuses (1) in der Nähe der Verstemmstelle (4) wenigstens einen umlaufenden Vorsprung (5), insbesondere Schneide aufweist, die mit der Bohrung des Ventilaufnahmekörpers (2) im wesentlichen reibschlüssig in Eingriff bringbar ist.

7. Ventil nach Anspruch 6, dadurch **gekennzeichnet**, daß mehrere Vorsprünge (5,5',5") mit entgegengesetzt zur Fügerichtung ansteigender Höhe (h,h',h") näherungsweise sägezahnförmig ausgebildet, hintereinander angeordnet sind.

8. Ventil nach Anspruch 7, dadurch **gekennzeichnet**, daß die Zahnschräge (6) in Fügerichtung in die Bohrung des Ventilaufnahmekörpers (2) weist.

9. Ventil nach mindestens einem der vorhergehenden Ansprüche, dadurch **gekennzeichnet**, daß das mittels Verstemmwirkung in die Ausnehmung (3) des Ventilgehäuses (1) verdrängbare Material aus dem relativ weicheren, plastisch verformbaren Werkstoff einer Bohrungsstufe (7) des Ventilaufnahmekörpers (2) gebildet ist.

10. Ventil nach einem der Ansprüche 1 bis 9, dadurch **gekennzeichnet**, daß zu beiden Seiten der quer zur Rotationsachse des Ventilgehäuses (1) verlaufenden Druckmitteldurchgangsbohrung (12) jeweils eine das Ventilgehäuse (1) mit dem Ventilaufnahmekörper (2) formschlüssig in Eingriff bringbare Verstemmstelle (4) vorgesehen ist.

11. Verfahren zur Herstellung eines Ventils, insbesondere Elektromagnetventils, mit einem Ventilgehäuse (1), das die Funktion des Ventils bestimmende Ventilbauteile, wie Ventilschließglied (9), Ventilsitz (13) aufweist, mit am Umfang des Ventilgehäuses (1) vorgesehenen Dichtflächen, die mit eine das Ventilgehäuse (1) tragenden Ventilaufnahmekörper (2) korrespondieren, mit einem das Ventilgehäuse (1) im Ventilaufnahmekörper (2) arretierenden Befestigungsmittel, insbesondere nach einem der vorhergehenden Ansprüche 1 bis 10, dadurch **gekennzeichnet**, daß die einzelnen Ventilbauteile, wie Ventilschließglied (9) und Ventilsitz (13) im Ventilgehäuse (1) vormontiert werden, daß das vormontierte Ventilgehäuse (1) mit einer definierten Axialkraft in den Ventilaufnahmekörper (2) kontinuierlich eingepreßt wird, daß die plastiche Verdrängung des während des Einpreßvorganges in eine Ausnehmung (3) des Ventilgehäuses (1) gelangenden Materialvolumens des Ventilaufnahmekörpers (2) näherungsweise proportional zur Montagekraft erfolgt.

12. Verfahren zur Herstellung eines Ventils nach Anspruch 11, dadurch **gekennzeichnet**, daß das während des Einpreßvorgangs maximal in die Ausnehmung (3) des Ventilgehäuses (1) verdrängte Materialvolumen des Ventilaufnahmekörpers (2) der zulässigen Montagekraft entspricht.

## Claims

1. A valve, in particular a solenoid valve, with a valve housing (1) which has valve components, such as a valve closure member (9), a valve seat (13), determining the function of the valve, with sealing surfaces provided on the circumference of the valve housing (1) which correspond with a valve accommodating body (2) carrying the valve housing (1), with a fastening means arresting the valve housing (1) in the valve accommodating body (2),
**characterized** in that, due to a relative motion of the valve housing (1) with respect to the valve accommodating body (2), the material volume existing on the circumference of the valve accommodating body (2) is plastically displaced into a recess (3) on the circumference of the valve housing (1).

2. A valve as claimed in claim 1,
**characterized** in that the material hardness of the material of the valve accommodating body (2) is less than that of the valve housing (1).

3. A valve as claimed in claim 1 or in claim 2,
**characterized** in that the perimeter of the valve housing (1) is provided with recesses (3) designed as annular grooves into which the material of the valve accommodating body (2) is displaced generally in proportion with the stroke motion of the two parts (1, 2) which are displaceable relative to each other.

4. A valve as claimed at least in one of the preceding claims 1 through 3,
**characterized** in that the valve housing (1) is designed as a caulking stamp.

5. A valve as claimed at least in one of the preceding claims, **characterized** in that the volume capacity of the recess (3) is equal to, or smaller than, a caulking spot (4) formed out of the displaceable volume.

6. A valve as claimed in claim 5,
**characterized** in that the surface area of the valve housing (1) near the caulking spot (4) at least has one surrounding projection (5), in particular a knife edge, which can be brought to mesh in an essentially frictional manner with the bore of the valve accommodating body (2).

7. A valve as claimed in claim 6,
**characterized** in that several projections (5, 5', 5") with a height (h, h', h"), which increases contrary to the jointing direction, and with a design which generally has a saw-tooth shape are arranged in succession near the caulking spot (4).

8. A valve as claimed in claim 7,
**characterized** in that the tooth bevel (6) points in the jointing direction into the bore of the valve accommodating body (2).

9. A valve as claimed at least in one of the preceding claims, **characterized** in that the material which - by means of a caulking action - is displaceable into the recess (3) of the valve housing (1) is formed by the relatively softer, plastically deformable material of a bore step (7) of the valve accommodating body (2).

10. A valve as claimed in any one of claims 1 through 9,
**characterized** in that, on both sides of the pressure medium passage bore (12) which is transverse to the axis of rotation of the valve housing (1), one caulking spot (4) each is provided which can bring the valve housing (1) in positive engagement with the valve accommodating body (2).

11. A process for manufacturing a valve, in particular a solenoid valve, with a valve housing (1) which has valve components, such as a valve closure member (9), a valve seat (13), determining the function of the valve, with sealing surfaces provided on the circumference of the valve housing (1) which correspond with a valve accommodating body (2) carrying the valve housing (1), with a fastening means arresting the valve housing (1) in the valve accommodating body (2), in particular as claimed in any one of the preceding claims 1 through 10,
**characterized** in that the individual valve components such as valve closure member (9) and valve seat (13) are pre-assembled in the valve housing (1), in that the pre-assembled valve housing (1) is continuously pressed into the valve accommodating body (2) with a defined axial force, in that the plastic displacement of the material volume of the valve accommodating body (2), which enters a recess (3) of the valve housing (1) during the pressing-in operation, takes place approximately in proportion to the force of assembly.

12. A process for manufacturing a valve as claimed in claim 11,
**characterized** in that the material volume of the valve accommodating body (2), which at the maximum is displaced into the recess (3) of the valve housing (1) during the pressing-in operation, corresponds to the permissible force of assembly.

## Revendications

1. Valve, notamment valve à électroaimant, comprenant un boîtier de valve (1), qui comporte les parties de valve déterminant le fonctionnement de la valve, telles qu'obturateur de valve (9), siège de valve (13), des surfaces d'étanchéité, prévues à la périphérie du boîtier de valve (1) et correspondant à un corps de logement de valve (2) portant le boîtier de valve (1), et des moyens de fixation immobilisant le boîtier de valve (1) dans le corps de logement de valve (2), caractérisée en ce que, sous l'effet d'un déplacement relatif du boîtier de valve (1) par rapport au corps de logement de valve (2), le volume de matière se trouvant à la périphérie du corps de logement de valve (2) est refoulé plastiquement dans un évidement (3) du boîtier de valve (1) se trouvant à la périphérie.

2. Valve suivant la revendication 1, caractérisée en ce que la matière du corps de logement de valve (2) possède une dureté plus faible que le boîtier de valve (1).

3. Valve suivant la revendication 1 ou 2, caractérisée en ce que la périphérie du boîtier de valve (1) est pourvue d'évidements (3), réalisés sous forme de gorges annulaires, dans lesquels la matière du corps de logement de valve (2) est refoulée d'une manière approximativement proportionnelle au déplacement de course des deux parties (1, 2) pouvant coulisser l'une par rapport à l'autre.

4. Valve suivant au moins l'une des revendications précédentes 1 à 3, caractérisée en ce que le boîtier de valve (1) est réalisé sous forme d'un poinçon de matage.

5. Valve suivant au moins l'une des revendications précédentes, caractérisée en ce que le volume que peut recevoir l'évidement (3) est égal ou plus petit qu'une zone de matage (4) formée à partir du volume refoulable.

6. Valve suivant la revendication 5, caractérisée en ce que la surface périphérique du boîtier de valve (1) comporte, au voisinage de la zone de matage (4), au moins une saillie (5), notamment arête, qui en fait tout le tour et qui peut être amenée en prise essentiellement par solidarisation par frottement avec l'alésage du corps de logement de valve (2).

7. Valve suivant la revendication 6, caractérisée en ce que plusieurs saillies (5, 5', 5") sont disposées l'une derrière l'autre en étant réalisées approximativement en forme de dents de scie avec une hauteur (h, h', h") croissant dans le sens opposé au sens d'assemblage.

8. Valve suivant la revendication 7, caractérisée en ce que l'inclinaison de dent (6) est orientée dans le sens d'assemblage dans l'alésage du corps de logement de valve (2).

9. Valve suivant au moins l'une des revendications précédentes, caractérisée en ce que la matière refoulable par l'effet de matage dans l'évidement (3) du boîtier de valve (1) est formée de la matière relativement plus tendre et déformable plastiquement d'un épaulement d'alésage (7) du corps de logement de valve (2).

10. Valve suivant l'une des revendications 1 à 9, caractérisée en ce que, sur chacun des deux côtés du perçage de passage d'agent de pression (12) s'étendant perpendiculairement à l'axe de rotation du boîtier de valve (1), il est prévu une zone de matage (4) respective pouvant amener le boîtier de valve (1) en prise avec le corps de logement de valve (2) par complémentarité de formes.

11. Procédé de réalisation d'une valve, notamment valve à électroaimant, comprenant un boîtier de valve (1), qui comporte les parties de valve déterminant le fonctionnement de la valve, telles qu'obturateur de valve (9), siège de valve (13), des surfaces d'étanchéité, prévues à la périphérie du boîtier de valve (1) et correspondant à un corps de logement de valve (2) portant le boîtier de valve (1), et des moyens de fixation immobilisant le boîtier de valve (1) dans le corps de logement de valve (2), notamment suivant l'une des revendications précédentes 1 à 10, caractérisé en ce qu'on préassemble les différentes parties de valve, telles qu'obturateur de valve (9) et siège de valve (13), dans le boîtier de valve (1), en ce qu'on enfonce à force le boîtier de valve (1) préassemblé dans le corps de logement de valve (2) d'une manière continue et avec une force axiale définie et en ce que le refoulement plastique du volume de matière du corps de logement de valve (2) qui parvient dans un évidement (3) du boîtier de valve (1) pendant l'opération d'enfoncement à force a lieu d'une manière approximativement proportionnelle à la force de montage.

12. Procédé de réalisation d'une valve suivant la revendication 11, caractérisé en ce que le volume maximal de matière du corps de logement de valve (2) qui est refoulé dans l'évidement (3) du boîtier de valve (1) pendant l'opération d'enfoncement à force correspond à la force de montage admissible.
